# EUROPÄISCHE PATENTANMELDUNG

(11) **EP 0 521 276 A1**
(43) Veröffentlichungstag der Anmeldung: **07.01.1993**
(21) Anmeldenummer: 92108193.1
(22) Anmeldetag: 13.05.1992
(51) Int. Cl.: F16L 47/02, F16L 47/00, B29C 65/34, B29C 65/36

(54) **Reduzierfitting**

(30) Priorität: 03.07.1991 DE 4121922
(71) Anmelder: Friatec Aktiengesellschaft Keramik- und Kunststoffwerke, D-68229 Mannheim (DE)
(72) Erfinder: Scholl, Reinhold, W-6800 Mannheim-Käfertal (DE); Rohr, Ulrich, W-6800 Mannheim 71 (DE)
(74) Vertreter: Klose, Hans, Dipl.-Phys.

(57) **Zusammenfassung**

Ein Reduzierfitting zur Verbindung von Rohrteilen mit unterschiedlichen Durchmessern enthält einen Körper (2) aus einem schweißbaren Kunststoff, der in einem ersten Teil (22) eine im wesentlichen zylindrische erste Innenfläche (24) mit einer Heizwicklung aufweist. Der Fertigungsaufwand für ein derartiges Reduzierfitting soll reduziert werden, wobei den Sicherheitsanforderungen zu genügen ist. Es wird daher vorgeschlagen, daß der Körper (2) aus einem ursprünglich zylindrischen Rohrstück hergestellt ist, welches über seine gesamte Länge (20) den gleichen Außendurchmesser (6) und den gleichen Innendurchmesser (18) aufwies. Ein zweiter Teil (32) des Reduzierfittings ist zum Anschluß des Rohrteils mit größerem Durchmesser vorgesehen und weist einen Außendurchmesser auf, der im wesentlichen gleichgroß ist wie der Außendurchmesser des genannten ersten Teils (22).

## Beschreibung

Die Erfindung bezieht sich auf ein Reduzierfitting zur Verbindung von Rohrteilen mit unterschiedlichen Außendurchmessern gemäß den im Oberbegriff des Patentanspruchs 1 angegebenen Merkmalen.

Derartige Reduzierfittings werden auch als Reduziermuffen oder Reduzierstücke bezeichnet, wobei die Verbindung des Fittings mit dem jeweiligen Rohrteil heute üblicherweise durch Elektroschweißen erfolgt. So hat beispielsweise die Friedrichsfeld AG Keramik- und Kunststoffwerke in 6800 Mannheim 71 Reduziermuffen unter der Typenbezeichnung FKWMR im Programm, welche als Doppelmuffen für unterschiedliche Rohraußendurchmesser ausgebildet sind. Es sind heute Kunststoffrohre mit genormtem Außendurchmesser auf dem Markt, wobei in den Normen die Außendurchmesser stufenweise vorgegeben sind, beispielsweise 32, 40, 50, 63 mm usw. und wobei mit den Reduziermuffen der Übergang auf eine andere Nennweite herstellbar ist. Die vorbekannten Reduziermuffen enthalten einen Körper aus einem thermoplastischen und/oder schweißbaren Werkstoff, insbesondere Polyolefin, und zwar Polyäthylen, welcher in einem speziellen Formgebungswerkzeug, zweckmäßig nach einem hinlänglich bekannten Kunststoffspritzverfahren, hergestellt wird. Der Werkzeug- und Fertigungsaufwand für einen derartigen Kunststoff-Formkörper ist nicht unerheblich. Die vorbekannten Reduziermuffen enthalten zwei Muffenteile, deren Innenflächen unterschiedliche Durchmesser aufweisen und jeweils eine Schweißwicklung mit einem zu einer Heizwendel gewickelten Heizdraht aufweisen.

Hiervon ausgehend liegt der Erfindung die Aufgabe zugrunde, den Fertigungsaufwand für das Reduzierfitting der eingangs genannten Art zu reduzieren, wobei dieses Reduzierfitting gleichwohl den geltenden Sicherheitsanforderungen genügen muß. Das Reduzierfitting soll einen geringen Material- und Gewichtsbedarf erfordern, und beim Schweißen soll der erforderliche Anpreßdruck zuverlässig aufgebracht werden können.

Die Lösung dieser Aufgabe erfolgt gemäß den im kennzeichnenden Teil des Patentanspruchs 1 angegebenen Merkmalen.

Das vorgeschlagene Reduzierfitting zeichnet sich durch eine funktionssichere Konstruktion aus und kann mit einem geringen Aufwand gefertigt werden. Der aus Kunststoff bestehende Körper des Fittings wird in zweckmäßiger Weise aus einem quasi endlos gefertigten Rohr lediglich durch Abschneiden auf die gewünschte Länge hergestellt. Besondere Spritzmaschinen oder dergleichen sind somit zur Herstellung nicht notwendig, da der Körper mit geringem Aufwand aus zylindrischen, insbesondere genormten, Rohren mit der erforderlichen Wanddicke durch Ablängen geschaffen wird. Das erfindungsgemäße Reduzierfitting weist nur in einem Teil auf der Innenfläche die Schweißwicklung auf, mittels welcher die Verbindung mit der Außenfläche des Rohrteiles mit dem kleineren Durchmesser hergestellt wird. Der andere Teil des Fittings enthält hingegen keine Schweißwicklung an seiner Innenfläche, sondern es erfolgt über seine Außenfläche oder seine Stirnfläche durch Heizwendelschweißen bzw. durch Stumpfschweißen die Verbindung mit dem Rohrteil, welches einen größeren Durchmesser aufweist. Das Fitting weist über seine Länge betrachtet im wesentlichen den gleichen Außendurchmesser auf, wobei lediglich in den Endbereichen Abschrägungen oder Fasen vorgesehen sein können. Die Innenfläche des ersten Teils mit der Schweißwicklung ist durch spanabhebende Bearbeitung, insbesondere durch Abdrehen, der ursprünglich zylindrischen Innenfläche auf das erforderliche Maß hergestellt. Im Übergang vom ersten Teil, dessen Innenfläche die Heizwicklung trägt, zum zweiten Teil ist bevorzugt eine Stufe vorhanden ist, welche als Anschlag für das einzuschiebende Rohrteil bzw. Spitzende dient.

In zweckmäßiger Weise ist die Außenfläche des ersten Teils mit einer Armierung versehen, welche als eine wendelförmige Wicklung oder als ein über seinen Umfang geschlossenes Rohr ausgebildet ist. Erfindungsgemäß erstreckt sich diese Armierung im wesentlichen nur über die halbe Gesamtlänge des Reduzierfittings. Diese Armierung erweist sich insbesondere bei Reduzierfittings für größere Nennweiten als besonders zweckmäßig, da aufgrund des reduzierten Gewichtes deren Handhabung erheblich erleichtert wird. Auch bei einer vergleichsweise geringen Wanddicke des Kunststoffkörpers wird mittels der Armierung ein radiales Ausweichen des Kunststoffes beim Schweißen verhindert. Die Armierung umgibt in besonders zweckmäßiger Weise nur den Bereich oder Teil, auf dessen Innenfläche die Heizwicklung angeordnet ist. Die Armierung weist einen um einen vorgegebenen Faktor, der bevorzugt wenigstens 5 beträgt, kleineren thermischen Ausdehnungskoeffizient als der Kunststoffkörper auf und beim Schweißen wird durch die Armierung der im Schweißbereich erforderliche Anpreßdruck sichergestellt.

Die Innenfläche des Reduzierfittings wird den Erfordernissen entsprechend durch spanabhebende Bearbeitung des innen ursprünglich zylindrischen Reduzierfittings erzeugt. So kann insbesondere die Innenfläche des ersten Teiles, auf dessen Innenfläche die Heizfläche angeordnet wird, durch Abdrehen auf das erforderliche Maß gebracht werden, um das Rohrteil mit den kleineren Abmessungen einschieben zu können. Ist die ursprüngliche Innenfläche des Reduzierfittings im wesentlichen gleich groß wie die Außenfläche des Rohrteils mit den kleineren Abmessungen, so muß lediglich noch die Innenfläche des zweiten Teils des Reduzierfittings bearbeitet werden. Die Innenfläche des zweiten Teils des Reduzierfittings weist in besonders zweckmäßiger Weise eine zur Stirnfläche sich erweiternde Kontur auf. Hierdurch werden in besonders zweckmäßiger Weise günstige Strömungsbedingungen vorgegeben. Diese sich erweiternde Innenfläche des zweiten Teils, wobei bedarfsweise die oben bereits erwähnte Stufe zur Innenfläche des ersten Teils vorgesehen sein kann oder aber auch ein direkter Übergang möglich ist, ist insbesondere als eine konische Erweiterung ausgebildet. Darüber hinaus kann auch eine andere kontinuierliche Erweiterung vorgesehen sein, um in zweckmäßiger Weise Strömungsverluste zu vermeiden und/oder die Neigung zum Festsetzen von Ablagerungen zu reduzieren. Durch die spanabhebende Formgebung kann den jeweiligen Anforderungen Rechnung getragen werden, wobei ohne besonderen Fertigungsaufwand die Anpassung an die jeweils zu berücksichtigenden Durchmesser der verschiedenen Rohrteile erfolgt und vor allem Spalte und/ oder sprunghafte Durchmesseränderungen zweckmäßig vermieden werden.

Weiterbildungen und besondere Ausgestaltungen der Erfindung sind in den Unteransprüchen angegeben.

Nachfolgend wird die Erfindung anhand der in der Zeichnung dargestellten Ausführungsbeispiele näher erläutert. Es zeigt:
- Fig. 1: das Fitting teilweise in einer seitlichen Ansicht und teilweise in einem axialen Längsschnitt,
- Fig. 2: drei miteinander verbundene Fittings, teilweise in seitlicher Ansicht und teilweise geschnitten.

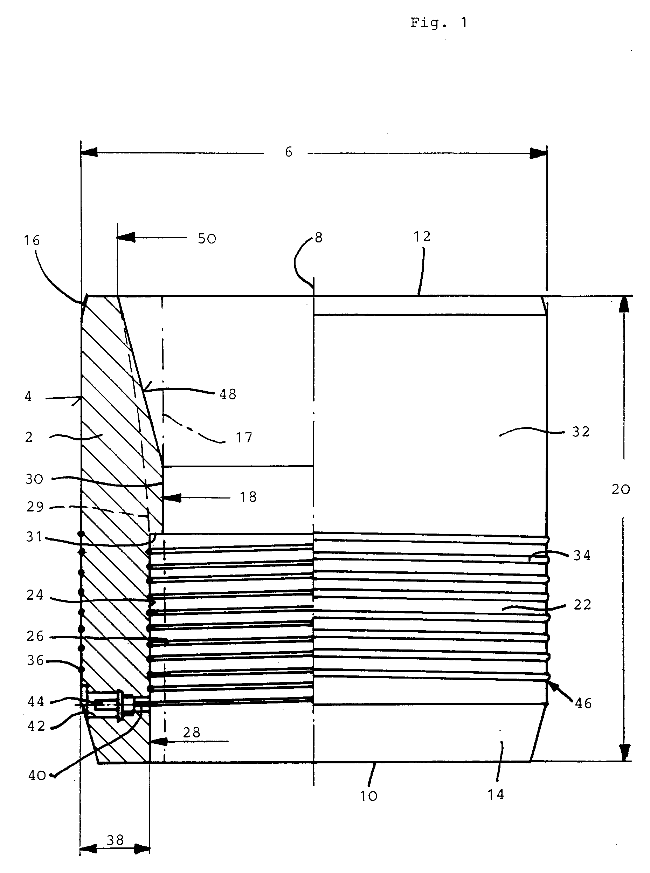

Fig. 1 zeigt in einer seitlichen Ansicht und in einem axialen Längsschnitt das Fitting, welches erfindungsgemäß als Reduzierfitting ausgebildet ist und einen Körper 2 aus Kunststoff aufweist. Der Kunststoff-Körper 2 weist eine im wesentlichen zylindrische Außenfläche 4 auf, deren Durchmesser 6 in Richtung einer Längsachse 8 im wesentlichen gleich groß ist. Lediglich im Bereich der axialen Stirnflächen 10, 12 ist eine Abschrägung 14 bzw. eine Fase 16 zur Vereinfachung der Handhabung vorgesehen. Der Körper 2 ist aus einem ursprünglich über seine gesamte Länge zylindrischen Rohrstück gefertigt, wobei ursprünglich die hier strichpunktiert angedeutete Innenfläche 17 dieses Rohrstücks einen Innendurchmesser 18 über die gesamte Länge 20 aufgewiesen hatte. Das genannte Rohrstück wurde aus einem in einem endlosen Produktionsverfahren hergestellten Kunststoffrohr auf die erforderliche Länge 20 geschnitten und nicht als Formstück in einem speziellen Formgebungswerkzeug mit den gewünschten Außen- bzw. Innenkonturen gefertigt. Der Körper 2 mit der der Zeichnung entnehmbaren Kontur wurde durch spanabhebende Bearbeitung der Innenfläche und vorteilhaft auch im Bereich der Stirnflächen der Außenfläche aus dem ursprünglich hohlzylindrischen Rohrstück hergestellt. Die Wanddicke dieses Rohrstückes ist mindestens gleich groß, insbesondere um einen vorgegebenen Wert größer, als die Hälfte der Außendurchmesserdifferenz der verbindenden Rohrteile.

Wie ersichtlich, weist der Körper 2 in seinem ersten Teil 22 eine erste Innenfläche 24 mit einer bifilaren Heizwicklung 26 auf. Der Innendurchmesser 28 der ersten Innenfläche 24 entspricht unter Berücksichtigung von Fertigungstoleranzen dem genormten Außendurchmesser des einen zu verbindenden Rohres oder Rohrteiles, welches nachfolgend der Einfachheit halber als das kleinere Rohr bezeichnet wird. Etwa in der Mitte der Längsausdehnung des Reduzierfittings ist noch ein ringförmiger Bereich 30 vorhanden, welcher eine zylindrische Innenfläche mit dem ursprünglichen Innendurchmesser 18 aufweist. Wie ersichtlich, ist der ursprüngliche Innendurchmesser 18 kleiner als der Innendurchmesser 28 der ersten Innenfläche 24, wobei im Übergang eine Stufe 31 vorhanden ist, welche als Anschlag beim Einschieben des kleineren Rohres dient.

In einer alternativen Ausgestaltung kann der ringförmige Bereich 30 mit der Stufe 31 entfallen, obgleich durch diese in zweckmäßiger Weise ein Anschlag geschaffen ist. Diese Ausführung ohne Anschlag gilt für die Fälle, in welchen die ursprüngliche Innenfläche im wesentlichen gleich oder nur geringfügig größer ist als die Außenfläche des einzuschiebenden kleineren Rohres. Für einen solchen Fall ist gemäß der gestrichelten Linie 29 die Innenfläche des zweiten Teils des Reduzierfittings angedeutet. Wie ersichtlich, kann die Innenfläche eine gebogene Kontur aufweisen.

Im ersten Teil 22 ist die Außenfläche 4 mit einer Armierung 34 versehen, welche beispielsweise als eine wendelförmige Wicklung aus einem Draht 36 besteht. Ferner kann diese Armierung 34 als ein über den Umfang geschlossenes Rohr ausgebildet sein, welches auf der Außenfläche angeordnet ist. Unabhängig von der jeweiligen Ausführungsform der Armierung 34 weist diese einen thermischen Ausdehnungskoeffizienten auf, der um einen vorgegebenen Faktor, bevorzugt wenigstens 5, kleiner ist als der thermische Ausdehnungskoeffizient des Körpers 2. Mit der Armierung 34 ist die Voraussetzung geschaffen, trotz vergleichsweise geringer Wanddicke 38 im ersten Teil beim Elektroschweißen den erforderlichen Anpreßdruck in der Schweißzone aufzubringen. Die Heizwicklung 26 ist als eine bifilare Wicklung ausgebildet. Wie ersichtlich, ist das eine Ende 40 der Heizwicklung 26 in eine Buchse 42 mit einem Steckerstift 44 geführt und mit diesem in geeigneter Weise verbunden. Die Buchse 42 mit dem Steckerstift 44 liegt in dem Bereich zwischen der axialen Stirnkante 10 des Fittings und dem nächstliegenden Ende 46 der Armierung 34. Wie bereits dargelegt, bleibt die Armierung 34 vor und nach dem Schweißen fest mit der Außenfläche des Körpers 2 verbunden, wobei aufgrund der gewählten Anordnung der Buchse 42 mit dem Steckerstift 44 dieser zum Schweißen problemlos mit einem zugeordneten Stecker eines Schweißgenerators verbunden werden kann. Das hier nicht dargestellte zweite Drahtende der Heizwicklung 26 ist in entsprechender Weise auf einen Steckerstift in einer Buchse geführt, welche zweckmäßig in der gleichen Radialebene, jedoch über den Umfang versetzt zur hier dargestellten Buchse 42 liegt.

Der zweite Teil 32 des erfindungsgemäßen Reduzierfittings dient zum Anschluß an ein zweites Rohrteil, dessen Durchmesser größer ist als der Durchmesser des bereits erwähnten kleineren Rohres. Der Anschluß bzw. Verbindung mit dem zweiten Rohrteil kann durch Stumpfschweißen ebenso erfolgen wie durch Heizwendelschweißen mittels einer entsprechenden Schweißmuffe. Da der Außendurchmesser 6 dem eines genormten Rohres entspricht, zumal der Körper 2 aus einem solchen genormten Rohr gefertigt ist, können problemlos die hinlänglich bekannten Verbindungstechniken mit dem Rohr des größeren Außendurchmessers realisiert werden. Von besonderer Bedeutung ist die kontinuierliche Aufweitung der Innenfläche 48 des zweiten Teils 32 in Richtung zur axialen Stirnkante 12. Wie dargestellt, ist die Innenfläche 48 in zweckmäßiger Weise konisch ausgebildet und geht innen in den erwähnten ringförmigen Bereich bevorzugt ohne Absatz oder dergleichen unmittelbar über. Die Innenfläche 48 wurde gleichfalls durch Abdrehen der ursprünglichen zylindrischen Innenfläche 17 hergestellt. Im Rahmen der Erfindung kann beispielsweise gemäß der Linie 29 auch eine andere Kontur der sich zur Stirnkante 12 sich erweiternden Innenfläche 48 vorgesehen werden, wobei unabhängig von der jeweiligen Ausgestaltung aufgrund der kontinuierlichen Erweiterung der Innenfläche 48 optimale Strömungsbedingungen geschaffen werden. Der maximale Durchmesser 50 der Innenfläche 48 an der axialen Stirnkante 12 entspricht im Rahmen dieser Erfindung im wesentlichen dem Innendurchmesser des anzuschließenden zweiten größeren Rohres, Rohrteiles, Fittings oder dergleichen. So wird ein weitgehend gleichförmiger Übergang geschaffen und Strömungsverluste vermieden bzw. die Neigung zu Ablagerungen oder Festsetzen von im Strömungsmedium mitgeführten Teilen oder Körpern erheblich reduziert.

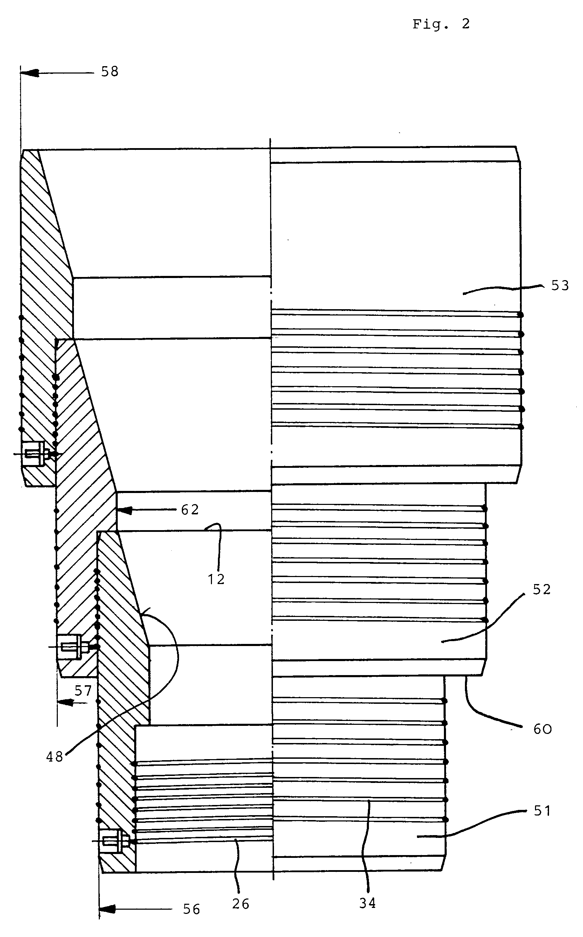

Fig. 2 zeigt drei ineinander gesetzte und miteinander verbundene erfindungsgemäße Reduzierfittings 51, 52, 53, welche jeweils unterschiedliche Außendurchmesser 56, 57, 58 wie dargestellt aufweisen. Die Außendurchmesser 56, 57, 58 entsprechen beispielsweise den gemäß Normung aufeinander folgenden gestuften Außendurchmessern von 40, 50 und 63 mm. Bei einer solchen Dimensionierung wird mit jedem Reduzierfitting eine Durchmesserstufe überbrückt. Im Rahmen dieser Erfindung kann es darüber hinaus von besonderem Vorteil sein, wenn Reduzierstücke bereitgestellt werden, die den Übergang auch von zwei oder mehr Normstufen ermöglichen, so daß beispielsweise die Außendurchmesser 56, 57, 58 den genormten Außendurchmessern 25, 40 und 63 mm entsprechen. Die jeweiligen Fittingkörper werden dementsprechend aus solchen Rohren zurechtgeschnitten, deren Wanddicke einen Reduziersprung von einem, zwei oder auch mehreren Durchmesserstufen ermöglichen. Unabhängig von der jeweiligen Wanddicke des Reduzierfittings ist von maßgebender Bedeutung, daß nur der jeweils erste Teil radial innen auf seiner Innenfläche die bifilare Heizwicklung 26 aufweist und außen mit der Armierung 34 versehen ist. Aufgrund der Ausbildung der Heizwicklung als bifilare Wicklung kann die Armierung 34 eine relativ große axiale Länge aufweisen und praktisch unmittelbar vor der Stirnkante 60 des nächstgrößeren Reduzierfittings 52 oder einer entsprechend ausgebildeten Schweißmuffe enden. Entsprechendes gilt natürlich, wenn beispielsweise mit dem Reduzierfittings 51 nicht das dargestellte Reduzierfitting 52 verbunden wird, sondern insbesondere mittels einer Doppelmuffe ein Rohr angeschlossen wird, dessen Außendurchmesser dem Außendurchmesser 56 des Reduzierfittings 51 entspricht. Festzuhalten bleibt, daß die sich zur Stirnkante kontinuierlich erweiternde Innenfläche 48 im Bereich der Stirnkante einen Durchmesser aufweist, welcher im wesentlichen dem Innendurchmesser 62 des nächstfolgenden Reduzierfittings 52 oder Rohrteils entspricht.

### Bezugszeichen

- 2: Körper
- 4: Außenfläche
- 6: Außendurchmesser von 2
- 8: Längsachse
- 10, 12: Stirnkante
- 14: Abschrägung
- 16: Fase
- 17: ursprüngliche Innenfläche
- 18: ursprünglicher Innendurchmesser
- 20: Länge
- 22: erster Teil
- 24: erste Innenfläche
- 26: Heizwicklung
- 28: Innendurchmesser von 24
- 29: Linie
- 30: ringförmiger Bereich
- 31: Stufe
- 32: zweiter Teil
- 34: Armierung
- 36: Draht
- 38: Wanddicke
- 40: Drahtende
- 42: Buchse
- 44: Steckerstift
- 46: Ende von 34
- 48: Innenfläche von 32
- 50: max. Durchmesser von 48
- 51, 52, 53: Reduzierfitting
- 56, 57, 58: Außendurchmesser von 51, 52, 53
- 60: Stirnkante
- 62: Innendurchmesser von 52

## Patentansprüche

1. Reduzierfitting zur Verbindung von Rohrteilen mit unterschiedlichen Durchmessern, enthaltend einen Körper (2) aus einem schweißbaren Kunststoff, der in einem ersten Teil (22) eine im wesentlichen zylindrische erste Innenfläche (24) mit einer Heizwicklung (26) aufweist, dadurch gekennzeichnet, daß der Körper (2) aus einem ursprünglich zylindrischen Rohrstück hergestellt ist, welches über seine gesamte Länge (20) den Außendurchmesser (6) und den Innendurchmesser (18) aufwies, und daß ein zweiter Teil (32) zum Anschluß eines Rohrteiles mit einem größeren Durchmesser vorgesehen ist, wobei der Außendurchmesser (6) des zweiten Teiles (32) im wesentlichen gleich groß ist wie der Außendurchmesser des genannten ersten Teiles (22).

2. Reduzierfitting nach Anspruch 1, dadurch gekennzeichnet, daß die Innenfläche (24) des ersten Teils (22) und/oder die Innenfläche (48) des zweiten Teils (32) durch spanabhebende Bearbeitung, insbesondere Abdrehen, der ursprünglichen Innenfläche (17) hergestellt sind.

3. Reduzierfitting nach Anspruch 1 oder 2, dadurch gekennzeichnet, daß die erste Innenfläche (24) einen Innendurchmesser (28) aufweist, welcher größer ist als ein Innendurchmesser (18) eines ringförmigen Bereiches (30), welcher im wesentlichen in der Mitte angeordnet ist.

4. Reduzierfitting nach einem der Ansprüche 1 bis 3, dadurch gekennzeichnet, daß der erste Teil (22) auf der Außenfläche eine Armierung (34) aufweist, welche im wesentlichen in der Mitte der Längserstreckung des Körpers (2) und/oder im wesentlichen in der Ebene endet, in welcher das innere Ende der Heizwicklung (26) liegt.

5. Reduzierfitting nach einem der Ansprüche 1 bis 4, dadurch gekennzeichnet, daß im Übergang zwischen der ersten Innenfläche (24) und dem ringförmigen Bereich (30) eine Stufe (31) als Anschlag für das einzuschiebende Rohrteil vorgesehen ist.

6. Reduzierfitting, insbesondere nach einem der Ansprüche 1 bis 5, dadurch gekennzeichnet, daß die Innenfläche (48) des zweiten Teils (32) ausgehend von dem Durchmesser (18) des ringförmigen Bereiches (30) oder der Innenfläche (24) des ersten Teils (22) insbesondere kontinuierlich erweitert und/oder daß der Durchmesser (50) der Innenfläche (48) im Bereich der axialen Stirnkante (2) im wesentlichen gleich groß ist wie der Innendurchmesser des zu verbindenden Rohrteils.

7. Reduzierfitting nach einem der Ansprüche 1 bis 6, dadurch gekennzeichnet, daß die Buchsen (42), in welchen die beiden Enden der Heizwicklung (26) insbesondere mit einem Steckerstift (44) nach außen geführt sind, in einem an die axiale Stirnkante (10) des ersten Teils (22) anschließenden Bereich angeordnet sind, wobei dieser Bereich bevorzugt zwischen der Armierung (34) und der axialen Stirnkante (10) liegt.

8. Reduzierfitting nach einem der Ansprüche 1 bis 7, dadurch gekennzeichnet, daß die Armierung (34) im wesentlichen in der gleichen Radialebene endet, in welcher insbesondere über die Stufe (31) die erste Innenfläche (24) mit der Heizwicklung (26) in den mittleren ringförmigen Bereich (30) mit zylindrischer Innenfläche übergeht.

9. Reduzierfitting nach einem der Ansprüche 1 bis 8, dadurch gekennzeichnet, daß die erste und die zweite Innenfläche (24; 48) und bevorzugt die im Bereich der axialen Stirnkanten (10, 12) vorgesehene Abschrägung (14) bzw. Fase (16) durch spanabhebende Bearbeitung des ursprünglich über seine gesamte Länge zylindrisch ausgebildeten Körpers (2) hergestellt sind und/oder daß der Körper (2) aus einem hohlzylindrischen Rohr hergestellt ist, dessen Wanddicke zumindest gleich, bevorzugt größer, ist als die halbe Differenz der Außendurchmesser der zu verbindenden Rohrteile.

10. Reduzierfitting nach einem der Ansprüche 1 bis 9, dadurch gekennzeichnet, daß der zweite Teil (32) derart ausgebildet ist, daß mittels einer Muffe, insbesondere Elektro-Schweißmuffe, oder durch Stumpfschweißen die Verbindung mit dem Rohrteil des größeren Außendurchmessers herstellbar ist und/oder daß die Heizwicklung (26) als bifilare Wicklung ausgebildet ist.
